# EUROPEAN PATENT APPLICATION

(11) **EP 3 007 273 A1**
(43) Date of publication of application: **13.04.2016**
(21) Application number: 14808469.2
(22) Date of filing: 26.05.2014
(51) Int. Cl.: H01Q 7/00, G06K 19/07, G06K 19/077, H01F 17/00, H01Q 1/24, H01Q 1/38

(54) **ANTENNA AND ELECTRONIC EQUIPMENT**

(30) Priority: 06.06.2013 JP 2013119510
(71) Applicant: Sony Corporation, Tokyo 108-0075 (JP)
(72) Inventor: ISHIKAWA Takuto, Tokyo 108-0075 (JP)
(74) Representative: Witte, Weller & Partner Patentanwälte mbB
(86) International application number: PCT/JP2014/063793
(87) International publication number: WO 2014/196391

(57) **Abstract**

The present technology relates to an antenna and electronic equipment, whereby the antenna can be downsized.

One or more standard coils including an opening part of a given size and one or more small coils including an opening part smaller in size than the opening part of the standard coil are connected electrically. A standard coil layer including the standard coil and a small coil layer including the small coil are stacked such that the opening part of the small coil lies within the opening part of the standard coil. A surface layer is the standard coil layer. The present technology can be applied to an antenna performing non-contact communication, and the like, for example.

## Description

### Technical Field

The present technology relates to an antenna and electronic equipment, and particularly to an antenna and electronic equipment, whereby the antenna can be downsized.

### Background Art

As an antenna of a radio frequency (RF) tag such as an integrated circuit (IC) card, which transmits and receives data by non-contact communication, there is a coil formed by spirally winding metal wire on a plane surface.

Moreover, there is proposed, as the antenna of an RF tag, an antenna in which, with a plane conductor disposed to face a coil, the coil and the plane conductor are capacitively coupled each other by a capacitive element so as to be hardly influenced by metal components (see Patent Literature 1, for example).

### Citation List

### Patent Literature

- Patent Literature 1:: JP 2011-193245A

### Summary of Invention

### Technical Problem

In order to secure certain communication quality in non-contact communication of the RF tag, it is necessary that a coupling coefficient between a coil as an RF tag antenna and a coil as a reader/writer (R/W) antenna performing non-contact communication with the RF tag is equal to or larger than a certain value.

In order to make a coupling coefficient (hereinafter, appropriately indicated using k) between a coil as an RF tag antenna and a coil as an R/W antenna equal to or larger than a certain value, it is required to make the areas of opening parts (opening areas) of the coil as the RF tag antenna and the coil as the R/W antenna equal to each other.

Thus, it has been difficult to adopt, as the RF tag antenna (coil), an antenna having an extremely smaller size (opening part) than the R/W antenna (coil).

Meanwhile, a digital camera, a smartphone, and other portable electronic equipment, for example, have been downsized recently, and the demand for embedding an RF tag in such small electronic equipment is increasing. In order to embed an RF tag in small electronic equipment, it is necessary to downsize an RF tag antenna.

In view of such a situation, the present technology can downsize an antenna.

### Solution to Problem

An antenna of the present technology is an antenna including: one or more standard coils including an opening part of a given size; and one or more small coils including an opening part smaller in size than the opening part of the standard coil, the one or more standard coils and the one or more small coils being connected electrically. A standard coil layer including the standard coil and a small coil layer including the small coil are stacked such that the opening part of the small coil lies within the opening part of the standard coil, and a surface layer is the standard coil layer.

Electronic equipment of the present technology is electronic equipment including: an antenna including one or more standard coils including an opening part of a given size, and one or more small coils including an opening part smaller in size than the opening part of the standard coil, the one or more standard coils and the one or more small coils being connected electrically; and a signal processor configured to perform signal processing for performing wireless communication using the antenna. A standard coil layer including the standard coil and a small coil layer including the small coil are stacked such that the opening part of the small coil lies within the opening part of the standard coil, and a surface layer is the standard coil layer.

In the present technology, one or more standard coils including an opening part of a given size and one or more small coils including an opening part smaller in size than the opening part of the standard coil are connected electrically. A standard coil layer including the standard coil and a small coil layer including the small coil are stacked such that the opening part of the small coil lies within the opening part of the standard coil. A surface layer is the standard coil layer.

### Advantageous Effects of Invention

According to the present technology, it is possible to downsize an antenna.

Note that the effects described in the present specification are merely examples, and the effects of the present technology are not limited to those described in the present specification and some additional effects may be exerted.

### Brief Description of Drawings

[FIG. 1] FIG. 1 is a diagram illustrating a configuration example of an embodiment of a communication system to which the present technology is applied.
[FIG. 2] FIG. 2 is a block diagram illustrating an electrical configuration example of a non-contact communication device 11.
[FIG. 3] FIG. 3 is a block diagram illustrating an electrical configuration example of a non-contact communication device 12.
[FIG. 4] FIG. 4 is a plan view illustrating a configuration example of an antenna part 21 of an R/W 11.
[FIG. 5] FIG. 5 is a perspective view schematically illustrating a configuration example of an outer appearance of an RF tag 12.
[FIG. 6] FIG. 6 is a diagram schematically illustrating a configuration example of an antenna part 41 of the RF tag 12.
[FIG. 7] FIG. 7 is a diagram schematically illustrating another configuration example of the antenna part 41 of the RF tag 12.
[FIG. 8] FIG. 8 is a plan view illustrating an outline of a configuration example of a standard coil layer.
[FIG. 9] FIG. 9 is a plan view illustrating an outline of a configuration example of a small coil layer.
[FIG. 10] FIG. 10 is a plan view illustrating a configuration example of each of the first layer to the sixth layer of a multilayer substrate as the antenna part 41.
[FIG. 11] FIG. 11 is a diagram illustrating a simulation result of simulation for measuring voltage amplitude of a modulation signal from the RF tag 12 observed at (the antenna part 21 of) the R/W 11.
[FIG. 12] FIG. 12 is a plan view illustrating an outline of another configuration example of layers of a stacked mixed layer antenna.
[FIG. 13] FIG. 13 is a plan view of each layer of a stacked mixed layer antenna, which illustrates a first another configuration example of the stacked mixed layer antenna.
[FIG. 14] FIG. 14 is a plan view of each layer of a stacked mixed layer antenna, which illustrates a second another configuration example of the stacked mixed layer antenna.
[FIG. 15] FIG. 15 is a plan view of each layer of a stacked mixed layer antenna, which illustrates a third another configuration example of the stacked mixed layer antenna.
[FIG. 16] FIG. 16 is a diagram illustrating a simulation result of a first coupling coefficient measurement for measuring a coupling coefficient.
[FIG. 17] FIG. 17 is a diagram illustrating a simulation result of a second coupling coefficient measurement for measuring a coupling coefficient.
[FIG. 18] FIG. 18 is a diagram illustrating a simulation result of a third coupling coefficient measurement for measuring a coupling coefficient.
[FIG. 19] FIG. 19 is a diagram illustrating a simulation result of a fourth coupling coefficient measurement for measuring a coupling coefficient.
[FIG. 20] FIG. 20 is a diagram illustrating a simulation result of a fifth coupling coefficient measurement for measuring a coupling coefficient.
[FIG. 21] FIG. 21 is a diagram illustrating a simulation result of a sixth coupling coefficient measurement for measuring a coupling coefficient.
[FIG. 22] FIG. 22 is a diagram illustrating a simulation result of a seventh coupling coefficient measurement for measuring a coupling coefficient.
[FIG. 23] FIG. 23 is a block diagram illustrating a configuration example of an embodiment of electronic equipment system to which a communication system is applied.
[FIG. 24] FIG. 24 is a diagram for explaining a concrete example of electronic equipment 110 and 120.

### Description of Embodiments

### < Embodiment of communication system to which present technology is applied >

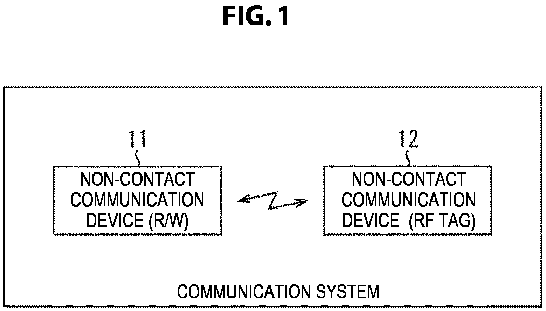

FIG. 1 is a diagram illustrating a configuration example of an embodiment of a communication system to which the present technology is applied (the system indicates a plurality of devices assembled logically and whether or not each component is in a same housing does not matter).

In FIG. 1, the communication system includes non-contact communication devices 11 and 12 performing non-contact communication.

Note that, in order to simplify the explanation, it is assumed, in the embodiment of FIG. 1, that the non-contact communication device 11 functions only as an initiator outputting a radio frequency (RF) signal by the non-contact communication device 11 itself and modulating the RF signal to transmit data, and the non-contact communication device 12 functions only as a target load-modulating the RF signal output by the initiator to transmit data.

The non-contact communication device 11 as an initiator is an R/W, for example, and the non-contact communication device 12 as a target is an RF tag, for example.

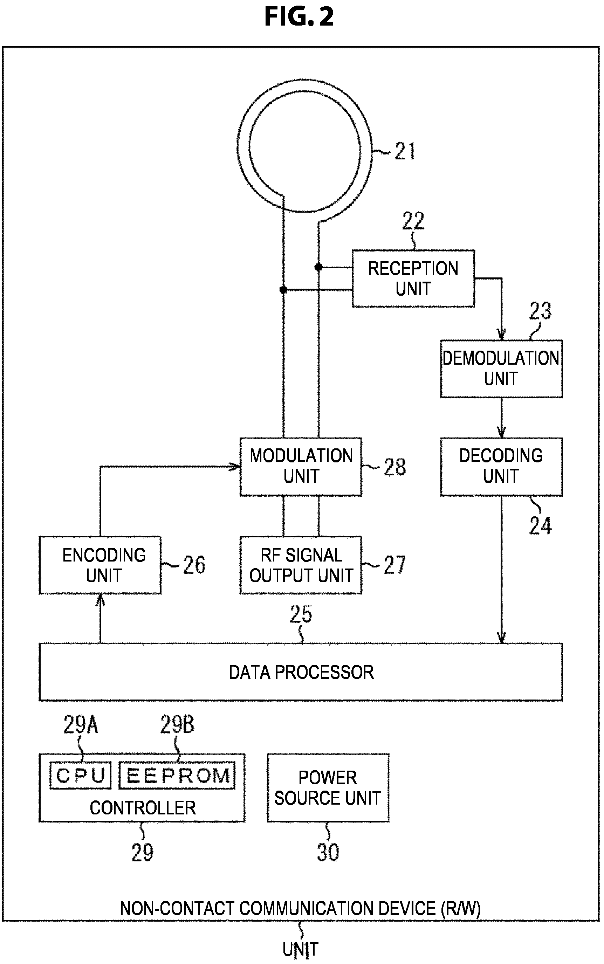

FIG. 2 is a block diagram illustrating an electrical configuration example of the non-contact communication device 11 of FIG. 1 that is an R/W.

The antenna part 21 is formed of a coil and the like, and outputs an RF signal in accordance with change of a current flowing in the coil. Moreover, a current flows in the antenna part 21 in accordance with change of a magnetic flux passing through the coil (crossing the coil) as the antenna part 21.

A reception unit 22 receives a current flowing in the antenna part 21 and outputs the current to a demodulation unit 23.

The demodulation unit 23 demodulates (demodulates by amplitude shift keying (ASK)) a signal supplied from the reception unit 22, and supplies the resulting demodulated signal to a decoding unit 24.

The decoding unit 24 decodes a Manchester code and the like, for example, as the demodulated signal supplied from the demodulation unit 23, and supplies data obtained as a decoding result to a data processor 25.

The data processor 25 performs given processing based on the data supplied from the decoding unit 24. Moreover, the data processor 25 supplies data to be transmitted to another device such as the non-contact communication device 12 to an encoding unit 26.

The encoding unit 26 encodes the data supplied from the data processor 25 into a Manchester code and the like, for example, and outputs the Manchester code and the like to a modulation unit 28.

An RF signal output unit 27 makes a current for emitting a carrier (RF signal) with a given single frequency f_{c} from the antenna part 21, flow into the antenna part 21.

The modulation unit 28 modulates a carrier as a current made flow into the antenna part 21 by the RF signal output unit 27, in accordance with a signal supplied from the encoding unit 26. Thus, the antenna part 21 emits an RF signal as a modulation signal obtained by modulating the carrier in accordance with (the Manchester code encoding) the data output to the encoding unit 26 by the data processor 25.

Here, as a modulation system in the modulation unit 28, there may be adopted amplitude shift keying (ASK), phase shift keying (PSK), quadrature amplitude modulation (QAM), or another digital modulation system, for example. When a modulation system modulating amplitude such as ASK is adopted, a modulation degree of amplitude can be selected among 8% to 30%, 50%, 100%, or another preferable value, for example.

A controller 29 controls each block constituting the non-contact communication device 11, for example. That is, the controller 29 includes a central processor (CPU) 29A, an electrically and erasable programmable read only memory (EEPROM) 29B, a random access memory (RAM) (not illustrated), and the like. The CPU 29A executes programs stored in the EEPROM 29B, thereby controlling each block constituting the non-contact communication device 11 and performing other various kinds of processing. The EEPROM 29B stores programs to be executed by the CPU 29A and data necessary for operation of the CPU 29A.

Note that a sequence of processing performed by the CPU 29A through execution of programs may be performed by a dedicated hardware provided instead of the CPU 29A. Moreover, the programs executed by the CPU 29A may be preliminarily installed in the EEPROM 29B, or may be stored (recorded) temporarily or permanently in a removable recording medium such as a flexible disc, a compact disc read only memory (CD-ROM), a magneto optical (MO) disc, a digital versatile disc (DVD), a magnetic disc, and a semiconductor memory and provided as so-called package software. Furthermore, the programs can be transmitted to the non-contact communication device 11 by proximity communication and the like, and installed in the EEPROM 29B.

A power source unit 30 supplies necessary power to each block constituting the non-contact communication device 11.

Note that, in FIG. 2, the illustration of a lines indicating that the controller 29 controls each block constituting the non-contact communication device 11 and the illustration of lines indicating that the power source unit 30 supplies power to each block constituting the non-contact communication device 11 are omitted because the drawing becomes complicated otherwise.

Moreover, it is possible to configure such that the decoding unit 24 and the encoding unit 26 can process a modified mirror, a non return to zero (NRZ), or any other codes, for example, other than a Manchester code.

In the non-contact communication device 11 configured as described above, the controller 29 controls each block of the non-contact communication device 11, whereby the non-contact communication device 11 functions as an R/W that is an initiator.

That is, in the non-contact communication device 11 that is an R/W (hereinafter, also referred to as an R/W 11), when data (frame) is transmitted, the RF signal output unit 27 makes a current for emitting a carrier with a given single frequency fc from the antenna part 21, flow into the antenna part 21, whereby the antenna part 21 emits an RF signal that is a carrier (non-modulated wave).

Moreover, in the R/W 11, the data processor 25 supplies data to be transmitted to the target to the encoding unit 26, and the encoding unit 26 encodes the data supplied from the data processor 25 into a Manchester code and then outputs the Manchester code to the modulation unit 28. The modulation unit 28 modulates a carrier as a current made flow into the antenna part 21 by the RF signal output unit 27, in accordance with a signal supplied from the encoding unit 26. Thus, the antenna part 21 emits an RF signal obtained by modulating the carrier in accordance with the data output to the encoding unit 26 by the data processor 25, and the data is transmitted to the target.

Meanwhile, in the R/W 11, when data (frame) transmitted from the target by load modulation is received, the reception unit 22 outputs a signal corresponding to a current on the antenna part 21, which is changed depending on load modulation of the target, to the demodulation unit 23. The demodulation unit 23 demodulates the signal supplied from the reception unit 22 and supplies the demodulated signal to the decoding unit 24. The decoding unit 24 decodes the Manchester code and the like, as the signal supplied from the demodulation unit 23, and supplies data obtained as a decoding result to the data processor 25. The data processor 25 performs given processing based on the data supplied from the decoding unit 24.

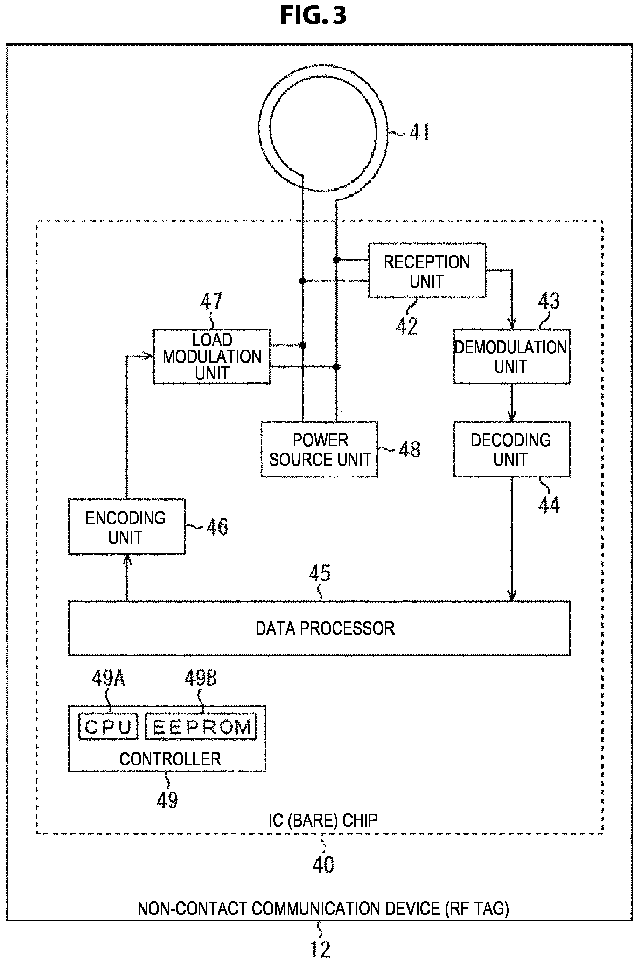

FIG. 3 is a block diagram illustrating an electrical configuration example of the non-contact communication device 12 of FIG. 1 that is an RF tag.

In FIG. 3, the non-contact communication device 12 includes an IC (bare) chip 40 and the antenna part 41.

The IC chip 40 includes a reception unit 42, a demodulation unit 43, a decoding unit 44, a data processor 45, an encoding unit 46, a load modulation unit 47, a power source unit 48, and a controller 49, and performs signal processing for performing wireless communication using the antenna part 41.

The antenna part 41 is formed of a coil and the like, and outputs an RF signal in accordance with change of a current flowing in the coil. Moreover, a current flows in the antenna part 41 in accordance with change of a magnetic flux passing through the coil as the antenna part 41.

The reception unit 42 receives a current flowing in the antenna part 41 and outputs the current to the demodulation unit 43.

The demodulation unit 43 demodulates a signal supplied from the reception unit 42 by ASK or the like, and supplies the demodulated signal to the decoding unit 44.

The decoding unit 44 decodes a Manchester code and the like, for example, as the signal supplied from the demodulation unit 43, and supplies data obtained as a decoding result to the data processor 45.

The data processor 45 performs given processing based on the data supplied from the decoding unit 44. Moreover, the data processor 45 supplies data to be transmitted to another device such as the non-contact communication device 11 to the encoding unit 46.

The encoding unit 46 encodes the data supplied from the data processor 45 into a Manchester code and the like, for example, and outputs the Manchester code and the like to the load modulation unit 47.

The load modulation unit 47 changes impedance when the coil as the antenna part 41 is viewed externally in accordance with a signal supplied from the encoding unit 46. When another device outputs an RF signal as a carrier, whereby an RF field (magnetic field) is formed around the antenna part 41, the change of the impedance when the coil as the antenna part 41 is viewed changes the RF field around the antenna part 41 as well. In this manner, the carrier as an RF signal output by another device is modulated (load-modulated) in accordance with a signal supplied from the encoding unit 46, and the data output to the encoding unit 46 by the data processor 45 is transmitted to another device outputting the RF signal.

Here, as the modulation system in the load modulation unit 47, there can be adopted ASK, PSK, QAM, and the like, similarly to the modulation unit 28 of FIG. 2. Furthermore, in the modulation system modulating amplitude, modulation amplitude for a carrier as an RF signal can be made a preferable value by adjusting a change amount of impedance as load.

The power source unit 48 obtains power from a current flowing in the antenna part 41 by an RF field formed around the antenna part 41, and supplies power to each block constituting the non-contact communication device 12.

The controller 49 controls each block constituting the non-contact communication device 12, for example. That is, the controller 49 includes a CPU 49A, an EEPROM 49B, a RAM (not illustrated), and the like, for example. The CPU 49A executes programs stored in the EEPROM 49B, thereby controlling each block constituting the non-contact communication device 12 and performing other various kinds of processing. The EEPROM 49B stores programs to be executed by the CPU 49A and data necessary for operation of the CPU 49A.

Here, a sequence of processing performed by the CPU 49A through execution of programs may be performed by dedicated hardware provided instead of the CPU 49A. Moreover, the programs executed by the CPU 49A may be preliminarily installed in the EEPROM 49B, or may be stored (recorded) temporarily or permanently in a removable recording medium such as a flexible disc, a CD-ROM, an MO disc, a DVD, a magnetic disc, and a semiconductor memory and provided as package software. Furthermore, the programs can be transmitted to the non-contact communication device 12 by proximity communication and the like, and installed in the EEPROM 49B.

Note that, in FIG. 3, the illustration of lines indicating that the controller 49 controls each block constituting the non-contact communication device 12 and the illustration of lines indicating that the power source unit 48 supplies power to each block constituting the non-contact communication device 12 are omitted because the drawing becomes complicated otherwise.

Moreover, in FIG. 3, the power source unit 48 obtains power from a current flowing in the antenna part 41. Alternatively, a cell (battery) may be provided in the non-contact communication device 12, so that power can be supplied to each block constituting the non-contact communication device 12 from the cell.

Furthermore, it is possible to configure such that the decoding unit 44 and the encoding unit 46 can process a modified mirror, a NRZ, or any other codes, for example, other than a Manchester code, similarly to the case of the decoding unit 24 and the encoding unit 26 in FIG. 2.

In the non-contact communication device 12 configured as described above, the controller 49 controls each block of the non-contact communication device 12, whereby the non-contact communication device 12 functions as a target.

That is, in the non-contact communication device 12 that is an RF tag (hereinafter, also referred to as an RF tag 12), when data (frame) is transmitted, the data processor 45 supplies data to be transmitted to the initiator to the encoding unit 46, and the encoding unit 46 encodes the data supplied from the data processor 45 into a Manchester code and outputs the Manchester code to the load modulation unit 47. The load modulation unit 47 changes impedance when the coil as the antenna part 41 is viewed externally in accordance with a signal supplied from the encoding unit 46.

Here, when the RF tag 12 is adjacent to the R/W 11, and the R/W 11 outputs an RF signal as a carrier, whereby an RF field is formed around the antenna part 41, the change of the impedance when the coil as the antenna part 41 changes the RF field around the antenna part 41 as well. In this manner, the RF signal output by the R/W 11 is modulated (load-modulated) in accordance with the signal supplied from the encoding unit 46, and the data output to the encoding unit 46 by the data processor 45 is transmitted to the R/W 11 outputting the RF signal.

Meanwhile, in the RF tag 12, when the R/W 11 receives data (frame) transmitted by modulating an RF signal as a carrier output by the R/W 11 itself, the reception unit 42 outputs a signal corresponding to a current flowing in the antenna part 41 in accordance with the RF signal modulated by the data, to the demodulation unit 43. The demodulation unit 43 demodulates the signal supplied from the reception unit 42 and supplies the signal to the decoding unit 44. The decoding unit 44 decodes a Manchester code and the like, as the signal supplied from the demodulation unit 43, and supplies data obtained as a decoding result to the data processor 45. The data processor 45 performs given processing based on the data supplied from the decoding unit 44.

### < Configuration example of antenna part 21 of R/W 11 >

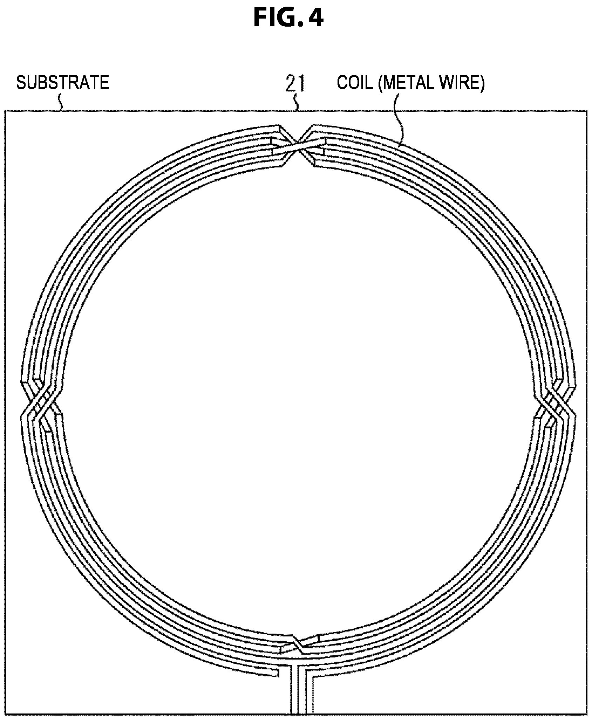

FIG. 4 is a plan view illustrating a configuration example of the antenna part 21 of the R/W 11 of FIG. 2.

In the antenna part 21 of FIG. 4, a coil having a substantially-circular opening part is formed by winding metal wire to form a substantially circular shape on a flat plate-shaped substrate.

As a coil as the antenna part 21 of the R/W 11, there can be adopted a coil satisfying evaluation specifications of the second wave of analog testing defined in a near field communication (NFC) forum.

The coil as the antenna part 21 of FIG. 4 is a coil satisfying the above-described evaluation specifications. The metal wire is wound by substantially four turns so as to cross at given positions, and the diameter is substantially 70 mm.

### < Configuration example of outer appearance of RF tag 12 >

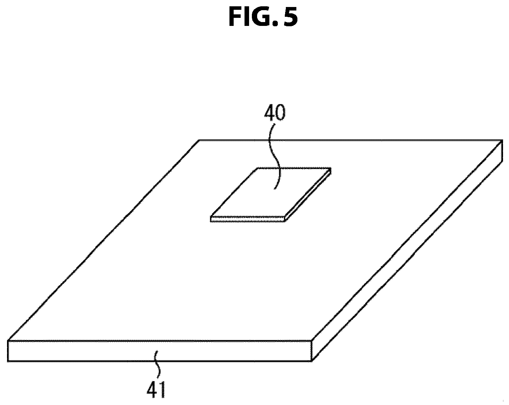

FIG. 5 is a perspective view schematically illustrating a configuration example of an outer appearance of the RF tag 12 of FIG. 3.

The RF tag 12 includes the IC (bare) chip 40 mounted on a substantially flat plate-shaped multilayer substrate as the antenna part 41.

### < Configuration example of antenna part 41 of RF tag 12 >

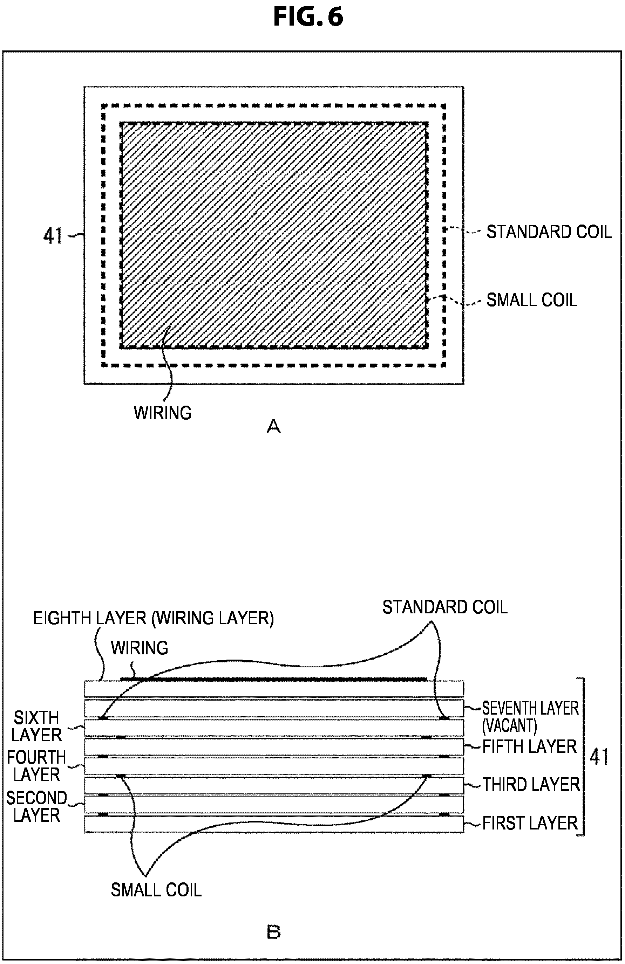

FIG. 6 is a diagram schematically illustrating a configuration example of the antenna part 41 of the RF tag 12 of FIG. 3.

That is, FIG. 6A is a plan view schematically illustrating a configuration example of the antenna part 41, and FIG. 6B is a section view of (a center part of) the antenna part 41 of FIG. 6A when cut in a horizontal direction.

The antenna part 41 includes a substantially flat plate-shaped multilayer substrate in which a standard coil layer including a standard coil (with a standard coil formed) and a small coil layer including a small coil (with a small coil formed) are stacked such that an opening part of the small coil lies within an opening part of the standard coil.

Here, the standard coil is a coil having an opening part with a given size, and the small coil is a coil having a smaller opening part than the standard coil.

As a size of (an opening part) of the standard coil, there can be adopted a size allowing an area of the opening part to be as large as possible when metal wire forming the standard coil is wound on the multilayer substrate as the antenna part 41, for example.

In FIG. 6, the multilayer substrate as the antenna part 41 has a substantially flat plate shape, and the shape (of the opening part) of the standard coil is substantially rectangular in accordance with the shape of the multilayer substrate.

Moreover, in FIG. 6, the small coil also has a substantially rectangular shape, similarly to the standard coil.

Note that, in the substantially rectangular standard coil and small coil, it is possible to arrange corner portions of the rectangle to be curved or not curved.

Moreover, as the shape of the standard coil and the small coil, there can be adopted a substantially circular shape, a substantially elliptical shape, or any other shapes, for example.

Furthermore, the shape of the standard coil and the shape of the small coil are not necessarily a same shape, and may be different shapes.

In the embodiment, the standard coil is formed on the standard coil layer such that a center of gravity of the standard coil layer that is a layer of a substantially rectangular multilayer substrate (intersection point of diagonal lines of a layer of a substantially rectangular multilayer substrate) matches a center of gravity of a substantially rectangular opening part of the standard coil.

Similarly, the small coil is formed on the small coil layer such that a center of gravity of the small coil layer that is a layer of a substantially rectangular multilayer substrate matches a center of gravity of a substantially rectangular opening part of the small coil.

Then, the standard coil layer and the small coil layer are stacked such that the centers of gravity match each other. Thus, the opening part of the small coil lies within the opening part of the standard coil.

In FIG. 6, the multilayer substrate as the antenna part 41 is a substrate of eight layers of the first layer to the eighth layer.

Here, the surface side on which the IC chip 40 (FIG. 6) is disposed in the flat plate-shaped multilayer substrate as the antenna part 41 is the upper side, and the surface side facing the upper side is the lower side. The layer on the lowermost side is the first layer that is the lowermost layer, and a layer on the uppermost side is the uppermost layer. In FIG. 6, the uppermost layer is the eighth layer.

In FIG. 6, the first layer, the second layer, the fourth layer, and the sixth layer are standard coil layers including a standard coil, and the third layer and the fifth layer are small coil layers including a small coil. Therefore, when paying attention to five layers of the second layer to the sixth layer, the standard coil layer and the small coil layer are stacked alternately in such five layers.

The seventh layer is a vacant layer without any parts, wiring, or the like, and the eighth layer is a wiring layer on which the IC 40 and wiring connecting the antenna part 41 and the outside are formed.

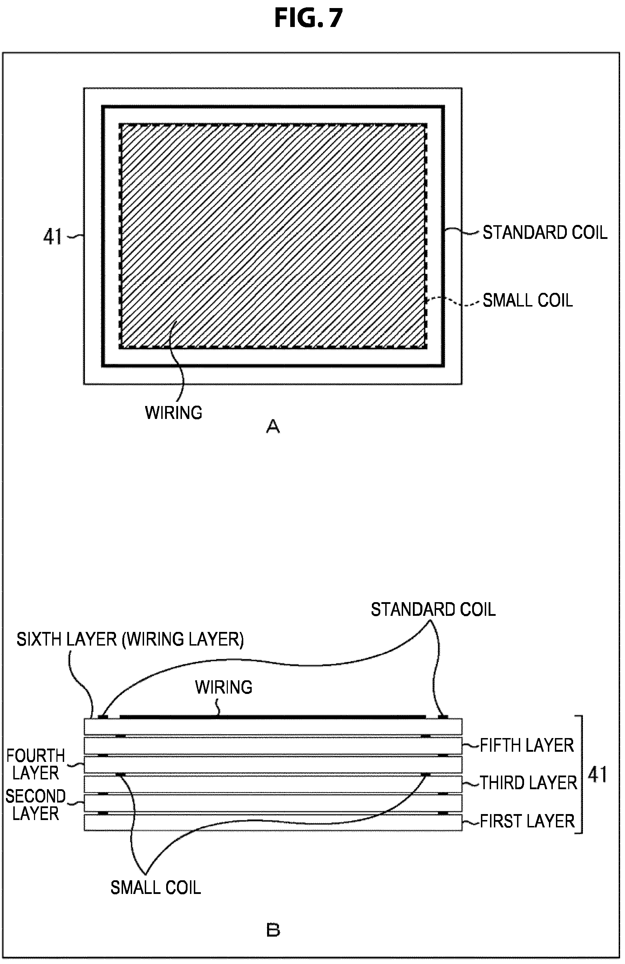

Note that, in FIG. 6 (also in FIG. 7 described later), rectangular wiring is illustrated to simplify the illustration. However, a given pattern of wiring is actually formed on the eighth layer.

Moreover, FIG. 6A is a plan view when the antenna part 41 is viewed from the upper side, and the standard coils and the small coils of the first layer to the six layers cannot be viewed directly from the upper side of the antenna part 41.

However, in the embodiment, the multilayer substrate as the antenna part 41 is formed of a material having a certain degree of transparency, for example, and the standard coils and the small coils formed on the lowermost layer, the uppermost layer, or a layer close to the lowermost layer can be viewed through as shade, as illustrated in a dotted line of FIG. 6A.

In the multilayer substrate as the antenna part 41 of FIG. 6, the standard coil layers including a standard coil or the small coil layers including a small coil are six layers of the first layer to the sixth layer. Therefore, the antenna part 41 of FIG. 6 substantially includes six coils (standard coils, small coils) stacked.

That is, the first layer to the sixth layer of the antenna part 41 function as an antenna of the RF tag 12.

As described above, the lowermost layer and the uppermost layer among the layers functioning as a coil forming the antenna of the RF tag 12 (hereinafter, also referred to as an antenna coil) in the antenna part 41 are also referred to as surface layers of the antenna coil.

In the antenna part 41 of FIG. 6, the first layer and the sixth layer are surface layers of the antenna coil.

In each layer of the multilayer substrate as the antenna part 41, a via (e.g., through-hole via) is formed, and each layer of the multilayer substrate as the antenna part 41 can be connected electrically through vias.

The standard coils or the small coils of layers of the first layer to the sixth layer are connected in series through vias in the order from the first layer to the sixth layer, thus forming a single antenna coil.

As described above, in the antenna coil, one or more standard coils and one or more small coils are connected electrically, the standard coil (standard coil layer) and the small coil (small coil layer) are stacked such that the opening part of the small coil lies within the opening part of the standard coil, and the surface layers are standard coils (standard coil layers).

Note that a thickness of each layer of the multilayer substrate as the antenna part 41 is about 100 µm approximately, for example, and a thickness of metal wire forming a standard coil or a small coil formed on each layer is about 18 µm approximately, for example. In this case, a thickness of a single layer on which a standard coil or a small coil is formed is about 120 µm approximately, and a thickness of a multilayer substrate including the first layer to the eighth layer is about 1 mm approximately.

FIG. 7 is a diagram schematically illustrating another configuration example of the antenna part 41 of the RF tag 12 of FIG. 3.

That is, FIG. 7A is a plan view schematically illustrating another configuration example of the antenna part 41, and FIG. 7B is a section view of the antenna part 41 of FIG. 7A when cut in a horizontal direction, similarly to the case of FIG. 6.

In FIG. 6, the multilayer substrate as the antenna part 41 is a multilayer substrate of eight layers. In FIG. 7, the multilayer substrate as the antenna part 41 is a multilayer substrate of six layers of the first layer to the sixth layer. Furthermore, the wiring is formed in the eighth layer that is the uppermost layer in FIG. 6, while the wiring is formed in the sixth layer that is the uppermost layer in FIG. 7.

The multilayer substrate as the antenna 41 of FIG. 7 is configured similarly to the case of FIG. 6 except the above-described aspects.

That is, also in FIG. 7, the first layer, the second layer, the fourth layer, and the sixth layer are standard coil layers including a standard coil, and the third layer and the fifth layer are small coil layers including a small coil, similarly to FIG. 6. Therefore, the first layer to the sixth layer are layers functioning as an antenna coil, and the first layer and the sixth layer that are surface layers are standard coil layers.

However, in FIG. 7, on the sixth layer that is a standard coil layer, wiring is formed in addition to a standard coil.

In FIG. 7, the wiring on the sixth layer is formed within the opening part of the standard coil. Therefore, as a size (of the opening part) of the standard coil, there is adopted a size allowing an area of the opening part to be as large as possible when metal wire forming the standard coil is wound on the multilayer substrate as the antenna part 41, whereby it is possible to increase the degree of freedom of the wiring formed on the sixth layer together with the standard coil.

Note that FIG. 7A is a plan view when the antenna part 41 is viewed from the upper side, and the standard coil and the wiring on the sixth layer can be viewed directly from the upper side of the antenna part 41, while the small coils formed on the layers other than the sixth layer cannot be viewed directly from the upper side of the antenna part 41.

However, in the embodiment, the multilayer substrate as the antenna part 41 is formed of a material having a certain degree of transparency, for example, as described in FIG. 6, and the small coils formed on the layers other than the sixth layer can be viewed through as shade, as illustrated in a dotted line of FIG. 7A, unless they are hidden by the wiring on the sixth layer.

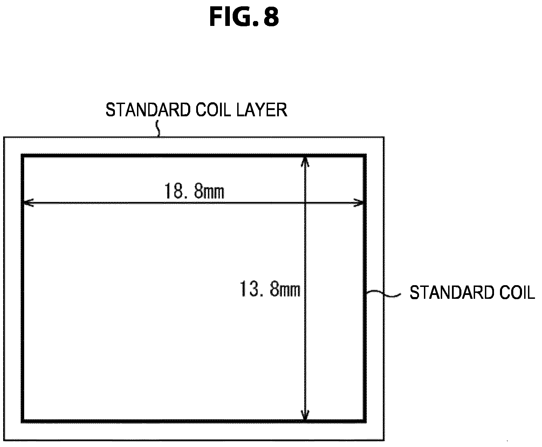

FIG. 8 is a plan view illustrating an outline of a configuration example of a standard coil layer.

As a standard coil formed on the standard coil layer, there can be adopted a substantially rectangular coil having an opening part of 18.8 mm × 13.8 mm, for example, which is a substantially rectangular coil having an opening part of substantially 19 mm × 14 mm (length × height), as illustrated in FIG. 8.

Note that in the present specification, the size of an opening part of a coil does not consider a wire width (diameter) of metal wire forming the coil (wire width of metal wire is 0) for the convenience of explanation. Therefore, the substantially rectangular coil having an opening part of 18.8 mm × 13.8 mm, for example, indicates a substantially rectangular coil having an external size of 18.8 mm × 13.8 mm.

The standard coil is formed on the standard coil layer such that a center of gravity of the standard coil layer matches a center of gravity of the opening part of the standard coil, for example.

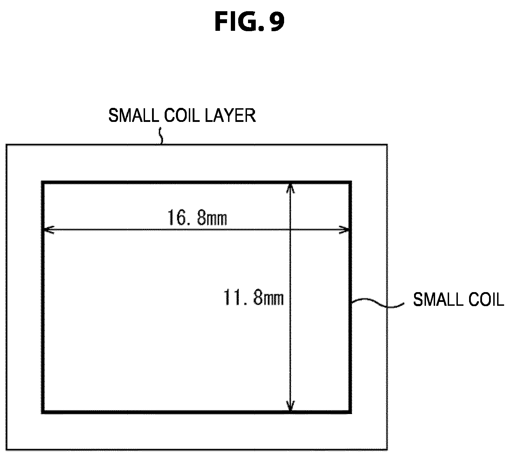

FIG. 9 is a plan view illustrating an outline of a configuration example of a small coil layer.

As a small coil formed on the small coil layer, there can be adopted a substantially rectangular coil having an opening part of 16.8 mm × 11.8 mm, for example, which is a substantially rectangular coil having an opening part of substantially 17 mm × 12 mm, as illustrated in FIG. 9.

The small coil is formed on the small coil layer such that a center of gravity of the small coil layer matches a center of gravity of the opening part of the small coil, for example.

When the standard coil layer of FIG. 8 and the small coil layer of FIG. 9 are stacked such that the centers of gravity of the standard coil layer and the small coil layer match each other, as illustrate in FIG. 6, the standard coil layer and the small coil layer are stacked such that a distance on a surface including the opening parts between the metal wire forming the standard coil and the metal wire forming the small coil becomes substantially 1 mm.

That is, in the plan views of FIG. 6A and FIG. 7A, when a distance between the metal wire forming the standard coil and the metal wire forming the small coil is a wiring interval between the standard coil and the small coil, the wiring interval becomes 1 mm in the antenna part 41 adopting the standard coil layer of FIG. 8 and the small coil layer of FIG. 9.

Here, the wiring interval is, to be exact, a distance between the centers of (sections of) the metal wire forming the standard coil and the small coil. Therefore, when a wire width (diameter) of metal wire forming the standard coil and the small coil is 0.3 mm, for example, a distance of a gap between metal wire having a wiring interval of 1 mm (distance between ends of metal wire) is 0.7 mm.

Note that in the embodiment, the number of turns of the standard coil and the small coil on each layer of the multilayer substrate as the antenna part 41 is substantially one turn.

That is, on the standard coil layer, a standard coil obtained by winding metal wire by substantially once is formed. Similarly, also on the small coil layer, a small coil obtained by winding metal wire by substantially once is formed.

However, as the standard coil on the standard coil layer, there can be adopted a coil obtained by winding metal wire by the number of times exceeding substantially once, such as substantially twice. Similarly, also as the small coil on the small coil layer, there can be adopted a coil obtained by winding metal wire by the number of times exceeding substantially once.

Note that the standard coil is not limited to a coil having the size illustrated in FIG. 8, and the small coil is also not limited to a coil having the size illustrated in FIG. 9.

Moreover, the area ratio between the opening part of the standard coil of FIG. 8 and the opening part of the small coil of FIG. 9 is substantially 4:3. That is, the area of the opening part of the small coil of FIG. 9 is substantially 75% of the area of the opening part of the standard coil of FIG. 8. As the small coil, there can be adopted a coil having an opening part whose area is larger or smaller than substantially 75% of the area of the opening part of the standard coil in a range where the area of the opening part of the small coil is smaller than the area of the opening part of the standard coil.

Furthermore, the antenna part 41 can be formed by stacking not only two kinds of layers of the standard coil layer and the small coil layer, and can be formed by stacking three kinds of stacked layers of such standard coil layer and small coil layer, and an additional micro coil layer on which a micro coil that is a coil having a smaller opening part than the small coil is formed such that the surface layer are standard layers.

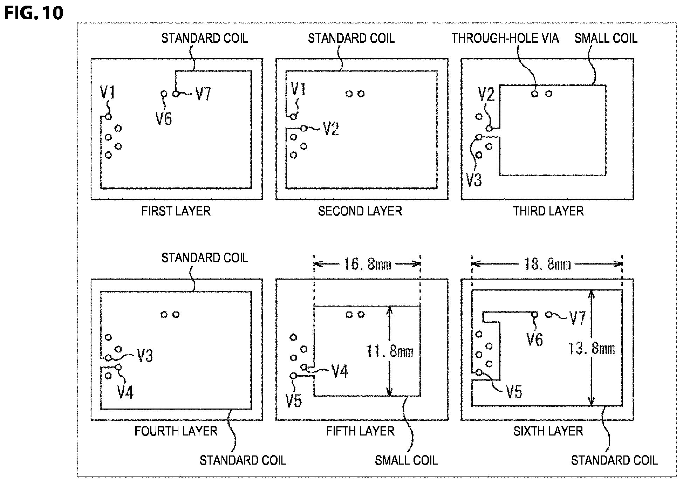

FIG. 10 is a plan view illustrating a configuration example of each of the first layer to the sixth layer in the multilayer substrate as the antenna part 41 in which the first layer to the sixth layer function as an antenna coil, which is illustrated in FIG. 6 and FIG. 7.

In the first layer to the sixth layer, vias v1 to v7 are formed at same positions.

On the first layer, a standard coil whose number of turns is substantially one turn is formed, and an end of the standard coil is connected to the via v1 and the other end is connected to the via v7.

Then, on the first layer, the via v7 is connected to the via v1 through the standard coil extending around in a clockwise direction.

On the second layer, a standard coil whose number of turns is substantially one turn is formed, and an end of the standard coil is connected to the via v1 and the other end is connected to the via v2. Therefore, an end of the standard coil of the first layer is connected to an end of the standard coil of the second layer through the via v1.

Then, on the second layer, the via v1 is connected to the via v2 through the standard coil extending around in a clockwise direction.

On the third layer, a small coil whose number of turns is substantially one turn is formed, and an end of the small coil is connected to the via v2 and the other end is connected to the via v3. Therefore, the other end of the standard coil of the second layer is connected to an end of the small coil of the third layer through the via v2.

Then, on the third layer, the via v2 is connected to the via v3 through the small coil extending around in a clockwise direction.

On the fourth layer, a standard coil whose number of turns is substantially one turn is formed, and an end of the standard coil is connected to the via v3 and the other end is connected to the via v4. Therefore, the other end of the small coil of the third layer is connected to an end of the standard coil of the fourth layer through the via v3.

Then, on the fourth layer, the via v3 is connected to the via v4 through the standard coil extending around in a clockwise direction.

On the fifth layer, a small coil whose number of turns is substantially one turn is formed, and an end of the small coil is connected to the via v4 and the other end is connected to the via v5. Therefore, the other end of the standard coil of the fourth layer is connected to an end of the small coil of the fifth layer through the via v4.

Then, on the fifth layer, the via v4 is connected to the via v5 through the small coil extending around in a clockwise direction.

On the sixth layer, a standard coil whose number of turns is substantially one turn is formed, and an end of the standard coil is connected to the via v5 and the other end is connected to the via v6. Therefore, the other end of the small coil of the fifth layer is connected to an end of the standard coil of the sixth layer through the via v5.

Then, on the sixth layer, the via v5 is connected to the via v6 through the standard coil extending around in a clockwise direction.

Therefore, when the first layer to the sixth layer are viewed from the via v6 and v7, the standard coils and the smalls coil of the first layer to the sixth layer form a single coil (antenna coil) wounded clockwise from the via v7 to the via v6, that is, a coil having the vias v6 and v7 as one end and the other end, respectively.

Note that the number of turns of the standard coil and the small coil is substantially one turn, that is, the number of turns may be slightly less than one turn as in the first layer, or slightly exceeding one turn as in the sixth layer, depending on positions at which the vias 1 to v7 connecting layers are provided.

Moreover, an opening part of the coil (standard coil) when the number of turns is slightly less than one turn as in the first layer, or slightly exceeding one turn as in the sixth layer, indicates a closed region formed, when metal wire is wound by one turn, by such one-turn of metal wire.

Furthermore, in FIG. 10, the vias v1 to v7 and the standard coils and the small coils are formed such that the vias are connected from the lower layer to the upper layer through the standard coils and the small coils extending around in a clockwise direction. However, it is possible to configure the vias v1 to v7 and the standard coils and the small coil such that the vias are connected from the lower layer to the upper layer through the standard coils and the small coils extending around in a counterclockwise direction.

As described in FIG. 6 to FIG. 10, the antenna part 41 (antenna coil) is formed by stacking four standard coils as one or more standard coils and two small coils as one or more small coils such that the surface layers are standard coils, whereby given performance can be maintained, for example, although the antenna part 41 is configured to be small.

That is, it is possible to downsize the antenna part 41 exerting given performance, for example.

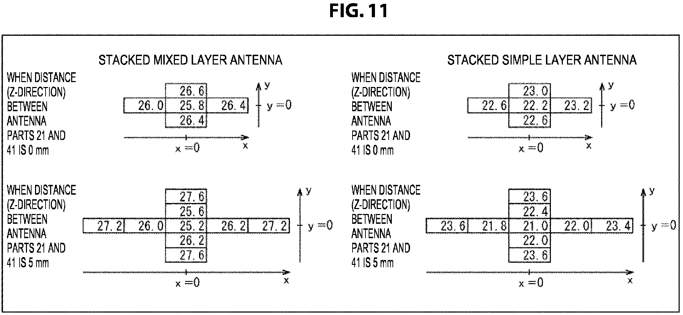

FIG. 11 is a diagram illustrating a simulation result of simulation for measuring voltage amplitude of a signal from the RF tag 12 observed at (the antenna part 21 of) the R/W 11, which has been performed by the present inventor.

In the simulation, voltage amplitude of a signal from the RF tag 12 observed at the R/W 11 was measured for each of the cases in which there is used, as the antenna part 41, an antenna coil in which the standard coils (layers) and the small coils (layers) illustrated in FIG. 10 are stacked in a mixed manner, as illustrated in FIG. 6 or FIG. 7 (hereinafter, also referred to as a stacked mixed layer antenna); a stacked mixed layer antenna including six layers, and in which there is used, as the antenna part 41, an antenna coil in which only the standard coils (layers) illustrated in FIG. 10 are stacked (hereinafter, also referred to as a stacked simple layer antenna); a stacked simple layer antenna including six layers.

FIG. 11 illustrates a result of measurement of voltage amplitude of a signal from the RF tag 12 observed at the R/W 11 when the antenna part 21 of the R/W 11 and the antenna part 41 of the RF tag 12 are disposed to face each other in parallel and a distance between the antenna part 21 and the antenna part 41 is set to each of 0 mm and 5 mm.

In FIG. 11, a numeral in a quadrangle in the center in each distance of 0 mm and 5 mm indicates voltage amplitude when no deviation exists between a center of gravity of the opening part of the coil (FIG. 4) as the antenna part 21 of the R/W 11 and a center of gravity of the opening parts of the standard coil and the small coil as the antenna part 41 of the RF tag 12. That is, when a position of the center of gravity of the opening parts of the standard coil and the small coil as the antenna part 41 of the RF tag 12 is indicated by coordinates (x, y) in a two-dimensional coordinate system with the center of gravity of the opening part of the coil as the antenna part 21 of the R/W 11 as an origin of coordinates, and the horizontal direction and the vertical direction as an x-direction and a y-direction, respectively, a numeral in the quadrangle in the center indicates voltage amplitude of a signal from the RF tag 12 observed at the R/W 11 in the case of (x, y) = (0, 0).

Moreover, in FIG. 11, each of deviation by one quadrangle in the horizontal direction (x-direction) or the vertical direction (y-direction) from the quadrangle in the center indicates deviation of a position by 5 mm in the horizontal direction or the vertical direction on a parallel plane, and a numeral in the quadrangle indicates voltage amplitude at that position. Therefore, a numeral in a quadrangle deviating by two quadrangles leftward from the quadrangle in the center indicates voltage amplitude of a signal from the RF tag 12 observed at the R/W 11 when the antenna part 41 of the RF tag 12 is at a position deviating by 10 mm in the left direction from the antenna part 21 of the R/W 11.

In FIG. 11, it can be confirmed that regardless of the positional relation between the antenna part 21 of the R/W 11 and the antenna part 41 of the RF tag 12, larger voltage amplitude is observed when a stacked mixed layer antenna coil is used than when a stacked simple layer antenna coil is used.

As described above, in the stacked mixed layer antenna, larger voltage amplitude can be observed than the stacked simple layer antenna although the external size (external size in a plane including an opening part of a coil) and the number of turns are same as those of the simple stacked antenna.

Moreover, in the simulation performed by the present inventor, it was confirmed that in communication between the R/W 11 including the antenna part 21 that is a coil with a diameter of 70 mm, which is illustrated in FIG. 4, and the RF tag 12 using the stacked mixed layer antenna with an external size of 18.8 mm × 13.8 mm as the antenna part 41, which is illustrated in FIG. 6 to FIG. 10, a certain coupling coefficient is achieved between (the coil as) the antenna part 21 and (the coil as) the antenna 41, and values satisfying the definition (specifications) of the NFC forum as voltage amplitude of a signal from the RF tag 12 observed at the R/W 11 and other items are obtained, although an opening area of the opening part of the antenna part 21 is significantly different from an opening area of the opening part of the antenna part 41.

Here, a coupling coefficient k between the antenna part 21 of the R/W 11 and the antenna part 41 of the RF tag 12 is a smaller value than a large value close to 1.0 such as a coupling coefficient of a coil forming a transformer.

In this case, the coupling coefficient k is a value proportional to the square root of a product between a ratio at which a magnetic flux from the antenna part 21 crosses the antenna part 41 and a ratio at which a magnetic flux from the antenna part 41 crosses the antenna part 21.

The method for increasing such a coupling coefficient k between the antennas 21 and 41 includes a method for increasing an opening area of the antenna part 41 so as to be an opening area same as the antenna part 21 that is a coil with a diameter of 70 mm, for example.

However, the increase of the opening area of the antenna part 41 is against the request for downsizing of the antenna part 41 (thus RF tag 12).

Meanwhile, the stacked mixed layer antenna is a coil in which in addition to the standard coil (layer), the small coil (layer) having a smaller opening area than the standard coil is stacked, and in the simulation performed by the present inventor, there has been obtained a simulation result indicating higher performance than the stacked simple layer antenna in which only the standard coils are stacked.

Note that the stacked mixed layer antenna as the antenna part 41 of the RF tag 12 has higher performance than the stacked simple layer antenna. In order to exert desired performance, it may be preferable to adjust the number of layers of the stacked mixed layer antenna, the number of turns, a size of the standard coil, a size of the small coil, and the like, in relation to the number of turns of the coil as the antenna part 21 of the R/W 11 and other parameters.

### < Other configuration examples of antenna part 41 >

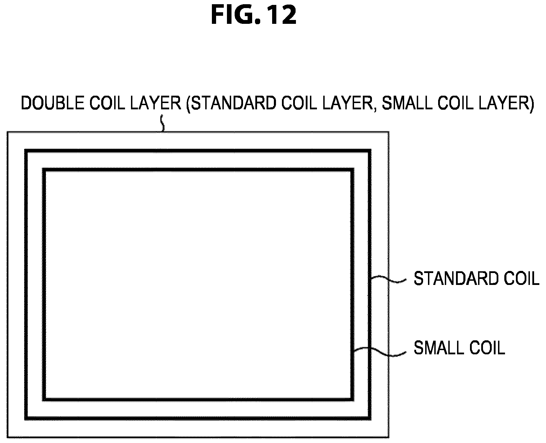

FIG. 12 is a plan view illustrating an outline of another configuration example of layers of a stacked mixed layer antenna.

As a layer of the stacked mixed layer antenna, there can be adopted a layer in which both a standard coil and a small coil are formed (hereinafter, also referred to as a double coil layer), as illustrated in FIG. 12, in addition to the standard coil layer illustrated in FIG. 8 and the small coil layer illustrated in FIG. 9.

On the double coil layer of FIG. 12, a standard coil and a small coil are formed such that a center of gravity of each opening part matches a center of gravity of each layer.

Note that the double coil layer can be referred to as a standard coil layer because it includes a standard coil. Moreover, the double coil layer can be referred to as a small coil layer because it includes a small coil.

As any layer except surface layers in the stacked mixed layer antenna, a double coil layer can be adopted.

Moreover, as any layer in the stacked mixed layer antenna, including surface layers, a double coil layer can be adopted.

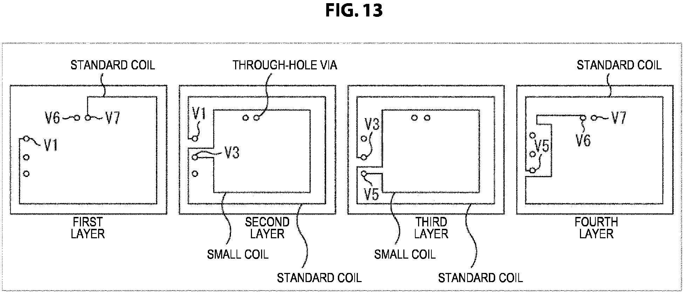

FIG. 13 is a plan view of each layer of a stacked mixed layer antenna, which illustrates a first another configuration example of the stacked mixed layer antenna.

The stacked mixed layer antenna of FIG. 13 includes four layers of the first layer to the fourth layer stacked from the lower side.

In the stacked mixed layer antenna of FIG. 13, the first layer and the fourth layer are standard coil layers (including only a standard coil), while the second layer and the third layer are double coil layers.

In the first layer to the fourth layer, the vias v1, v3, v5, v6, and v7 are formed at same positions.

Then, on the first layer, only a standard coil whose number of turns is substantially one turn is formed, and an end of the standard coil is connected to the via v1 and the other end is connected to the via v7.

On the first layer, the via v7 is connected to the via v1 through the standard coil extending around in a clockwise direction.

On the second layer, a standard coil and a small coil whose number of turns is substantially one turn are formed, and an end of the standard coil is connected to the via v1 and the other end is connected to an end of the small coil. Then, the other end of the small coil is connected to the via v3. Therefore, an end of the standard coil of the first layer is connected to an end of the standard coil of the second layer through the via v1.

On the second layer, the via v1 is connected to the via 3 through the standard coil extending around in a clockwise direction and further the small coil extending around in a clockwise direction.

On the third layer, a standard coil and a small coil whose number of turns is substantially one turn are formed, and an end of the standard coil is connected to the via v3 and the other end is connected to one body of the small coil. Then, the other end of the small coil is connected to the via v5. Therefore, the other end of the small coil of the second layer is connected to an end of the standard coil of the third layer through the via v3.

On the third layer, the via v3 is connected to the via 5 through the standard coil extending around in a clockwise direction and further the small coil extending around in a clockwise direction.

On the fourth layer, only a standard coil whose number of turns is substantially one turn is formed, and an end of the standard coil is connected to the via v5 and the other end is connected to the via v6. Therefore, the other end of the small coil of the third layer is connected to an end of the standard coil of the fourth layer through the via v5.

On the fourth layer, the via v5 is connected to the via v6 through the standard coil extending around in a clockwise direction.

When the above-described stacked mixed layer antenna in which the first layer to the fourth layer are stacked is viewed from the vias v6 and v7, the standard coils and the small coils of the first layer to the fourth layer form a single coil (antenna coil) wounded clockwise from the via v7 to the via v6, that is, a coil having the vias v6 and v7 as one end and the other end, respectively.

Here, assuming a-layer b-turn when the number of layers of a stacked mixed layer antenna is a-layers and the number of turns in the entire coil as the stacked mixed layer antenna is (substantially) b-turns, the stacked mixed layer antenna of FIG. 13 is a 4-layer 6-turn coil.

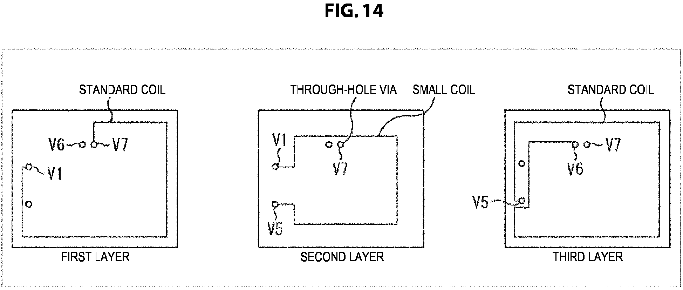

FIG. 14 is a plan view of each layer of a stacked mixed layer antenna, which illustrates a second another configuration example of the stacked mixed layer antenna.

The stacked mixed layer antenna of FIG. 14 is a three-layer three-turn coil including three layers of the first layer to the third layer stacked from the lower side.

In the stacked mixed layer antenna of FIG. 14, the first layer and the third layer are standard coil layers (including only a standard coil), while the second layer is a small coil layer (including only a small coil).

In the first layer to the third layer, the vias v1, v5, v6, and v7 are formed at same positions.

Then, on the first layer, only a standard coil whose number of turns is substantially one turn is formed, and an end of the standard coil is connected to the via v1 and the other end is connected to the via v7.

On the first layer, the via v7 is connected to the via v1 through the standard coil extending around in a clockwise direction.

On the second layer, only a small coil whose number of turns is substantially one turn is formed, and an end of the small coil is connected to the via v1 and the other end is connected to the via v5. Therefore, an end of the small coil of the first layer is connected to an end of the small coil of the second layer through the via v1.

On the second layer, the via v1 is connected to the via v5 through the small coil extending around in a clockwise direction.

On the third layer, only a standard coil whose number of turns is substantially one turn is formed, and an end of the standard coil is connected to the via v5 and the other end is connected to the via v6. Therefore, the other end of the small coil of the second layer is connected to an end of the standard coil of the third layer through the via v5.

On the third layer, the via v5 is connected to the via v6 through the small coil extending around in a clockwise direction.

When the above-described stacked mixed layer antenna in which the first layer to the third layer are stacked is viewed from the vias v6 and v7, the standard coils and the small coil of the first layer to the third layer form a single coil wounded clockwise from the via v7 to the via v6, that is, a coil having the vias v6 and v7 as one end and the other end, respectively.

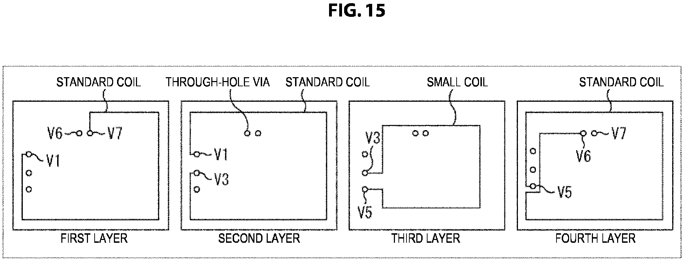

FIG. 15 is a plan view of each layer of a stacked mixed layer antenna, which illustrates a third another configuration example of the stacked mixed layer antenna.

The stacked mixed layer antenna of FIG. 15 is a four-layer four-turn coil including four layers of the first layer to the fourth layer stacked from the lower side.

In the stacked mixed layer antenna of FIG. 15, the first layer, the second layer, and the fourth layer are standard coil layers (including only a standard coil), while the third layer is a small coil layer (including only a small coil).

In the first layer to the fourth layer, the vias v1, v3, v5, v6, and v7 are formed at same positions.

Then, on the first layer, only a standard coil whose number of turns is substantially one turn is formed, and an end of the standard coil is connected to the via v1 and the other end is connected to the via v7.

On the first layer, the via v7 is connected to the via v1 through the standard coil extending around in a clockwise direction.

On the second layer, only a standard coil whose number of turns is substantially one turn is formed, and an end of the standard coil is connected to the via v1 and the other end is connected to the via v3. Therefore, an end of the standard coil of the first layer is connected to an end of the standard coil of the second layer through the via v1.

On the second layer, the via v1 is connected to the via v3 through the standard coil extending around in a clockwise direction.

On the third layer, only a small coil whose number of turns is substantially one turn is formed, and an end of the small coil is connected to the via v3 and the other end is connected to the via v5. Therefore, the other end of the standard coil of the second layer is connected to an end of the small coil of the third layer through the via v3.

On the third layer, the via v3 is connected to the via v5 through the small coil extending around in a clockwise direction.

On the fourth layer, only a standard coil whose number of turns is substantially one turn is formed, and an end of the standard coil is connected to the via v5 and the other end is connected to the via v6. Therefore, the other end of the small coil of the third layer is connected to an end of the standard coil of the fourth layer through the via v5.

On the fourth layer, the via v5 is connected to the via v6 through the small coil extending around in a clockwise direction.

When the above-described stacked mixed layer antenna in which the first layer to the fourth layer are stacked is viewed from the vias v6 and v7, the standard coils and the small coil of the first layer to the fourth layer form a single coil wounded clockwise from the via v7 to the via v6, that is, a coil having the vias v6 and v7 as one end and the other end, respectively.

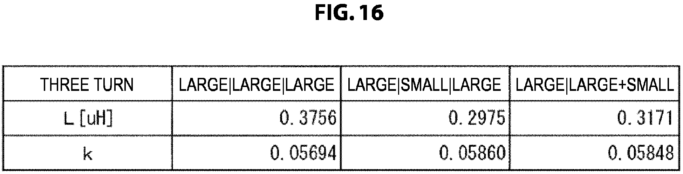

FIG. 16 is a diagram illustrating a simulation result of the first coupling coefficient measurement for measuring a coupling coefficient performed by the present inventor.

In the first coupling coefficient measurement simulation, an inductance L and a coupling coefficient k with the antenna part 21 of the R/W 11 (FIG. 4) were measured with respect to coils whose number of turns is three. Note that the measurement of the coupling coefficient k was performed with a distance (z-direction) between the coil to be measured and the antenna part 21 of the R/W 11 set to be 0 mm. This aspect is the same also in the second to seventh coupling coefficient measurement simulation described later.

As a three-turn coil whose coupling coefficient k is to be measured, there were adopted a stacked simple layer antenna in which all of three layers are standard coil layers including only a standard coil, a stacked mixed layer antenna in which the first layer is a standard coil layer including only a standard coil, the second layer is a small coil layer including only a small coil, and the third layer is a standard coil layer including only a standard coil, and a stacked mixed layer antenna in which the first layer is a standard coil layer including only a standard coil and the second layer is a double coil layer including a standard coil and a small coil.

Here, in FIG. 16 (same in the drawings described later), "|" of "large|large|large", for example, indicates separation of layers, and "large" indicates that the layer is a standard coil layer including only a standard coil. Moreover, the layer separated by "|" is lower layer toward the left side, and the layer on the left end separated by "|"is the first layer.

Therefore, "large|large|large" indicates a three-layer three-turn coil (stacked simple layer antenna) in which the first layer is a standard coil layer, the second layer is a standard coil layer, and the third layer is a standard coil.

Moreover, "small" of "large|small|large" indicates that the layer is a small coil layer including only a small coil, and "large+small" of "large|large+small|" indicates that the layer is a double coil layer including a standard coil and a small coil.

Therefore, "large|small|large" indicates that the first layer is a three-layer three-turn coil (stacked mixed layer antenna) in which the first layer is a standard coil layer, the second layer is a small coil layer, and the third layer is a standard coil layer. Moreover, "large|large+small" indicates a two-layer three-turn coil (stacked mixed layer antenna) in which the first layer is a standard coil and the second layer is a double coil layer.

Note that in the simulation, the number of turns of any of the standard coil of the standard coil layer, the small coil of the small coil layer, the standard coil of the double coil layer, and the small coil of the double coil layer is (substantially) one turn.

Therefore, "large|large|large", "large|small|large", "large|large+small" of FIG. 16 all indicate a three-turn coil.

In the first coupling coefficient measurement simulation, it can be confirmed that, with respect to the coils whose number of turns is three, the coupling coefficient k is larger in "large|small|large" or "large|large+small" including a small coil than in "large|large|large" not including a small coil.

Furthermore, in the first coupling coefficient measurement simulation, it can be confirmed that, with respect to "large|small|large" and "large|large+small" including a small coil, the coupling coefficient k is larger in "large|small|large" in which the surface layers are standard coil layers including only a standard coil than in "large|large+small" in which the surface layer is a double coil layer.

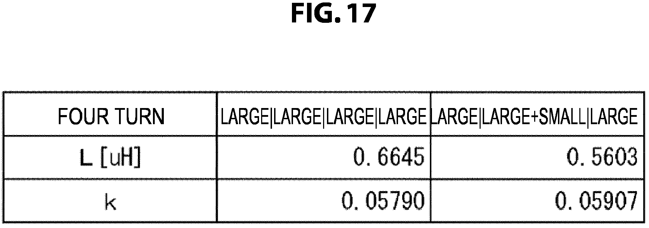

FIG. 17 is a diagram illustrating a simulation result of the second coupling coefficient measurement for measuring a coupling coefficient performed by the present inventor.

In the second coupling coefficient measurement simulation, an inductance L and a coupling coefficient k with the antenna part 21 of the R/W 11 (FIG. 4) were measured with respect to coils whose number of turns is four.

As a four-turn coil whose coupling coefficient k is to be measured, "large|large|large|large" and "large|large+small|large" were adopted.

Here, "large|large|large|large" indicates a coil as a four-layer four-turn stacked simple layer antenna in which all of four layers are standard coil layers including only a standard coil, and "large|large+small|large" indicates a coil as a three-layer four-turn stacked mixed layer antenna in which the first layer is a standard coil layer including only a standard coil, the second layer is a double coil layer, and the third layer is a standard coil layer including only a standard coil.

In the second coupling coefficient measurement simulation, it can be confirmed that, with respect to the coils whose number of turns is four, the coupling coefficient k is larger in "large|large+small|large" including a small coil than in "large|large|large|large" not including a small coil, similarly to the coils whose number of turn is three in FIG. 16.

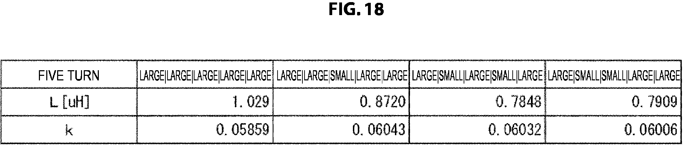

FIG. 18 is a diagram illustrating a simulation result of the third coupling coefficient measurement for measuring a coupling coefficient performed by the present inventor.

In the third coupling coefficient measurement simulation, an inductance L and a coupling coefficient k with the antenna part 21 of the R/W 11 (FIG. 4) were measured with respect to coils whose number of turns is five.

As a five-turn coil whose coupling coefficient k is to be measured, there were adopted "large|large|large|large|large", "large|large|small|large|large", "large|small|large|small|large", and "large|small|small|large|large".

Here, "large|large|large|large|large" indicates a coil as a five-layer five-turn stacked simple layer antenna in which all of five layers are standard coil layers including only a standard coil, and "large|large|small|large|large" indicates a coil as a five-layer five-turn stacked mixed layer antenna in which the first layer and the second layers are standard coil layers including only a standard coil, the third layer is a small coil layer including only a small coil, and the fourth layer and the fifth layer are standard coil layers including only a standard coil.

Moreover, "large|small|large|small|large" indicates a coil as a five-layer five-turn stacked mixed layer antenna in which the first layer, the third layer, and the fifth layer are standard coil layers including only a standard coil, and the second layer and the fourth layer are small coil layers including only a small coil. "Large|small|small|large|large" indicates a coil as a five-layer five-turn stacked mixed layer antenna in which the first layer, the fourth layer, and the fifth layer are standard coil layers including only a standard coil, and the second layer and the third layer are small coil layers including only a small coil.

In the third coupling coefficient measurement simulation, it can be confirmed that, with respect to the coils whose number of turns is five, the coupling coefficient k is larger in "large|large|small|large|large", "large|small|large|small|large", and "large|small|small|large|large" including a small coil than in "large|large|large|large|large" not including a small coil, similarly to the coil whose number of turn is three in FIG. 16.

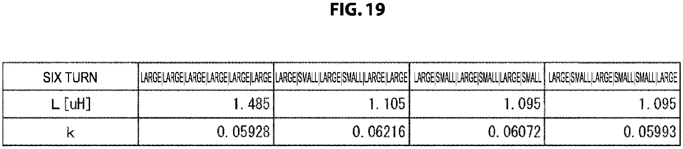

FIG. 19 is a diagram illustrating a simulation result of the fourth coupling coefficient measurement for measuring a coupling coefficient performed by the present inventor.

In the fourth coupling coefficient measurement simulation, an inductance L and a coupling coefficient k with the antenna part 21 of the R/W 11 (FIG. 4) were measured with respect to coils whose number of turns is six.

As a six-turn coil whose coupling coefficient k is to be measured, there were adopted "large|large|large|large|large|large", "large|small|large|small|large|large", "large|small|large|small|large|small", and "large|small|large|small|small|large".

Here, "large|large|large|large|large|large" indicates a coil as a six-layer six-turn stacked simple layer antenna in which all of six layers are standard coil layers including only a standard coil, and "large|small|large|small|large|large" indicates a coil as a six-layer six-turn stacked mixed layer antenna in which the first layer, the third layer, the fifth layer, and the sixth layer are standard coil layers including only a standard coil, and the second layer and the fourth layer are small coil layers including only a small coil.

Moreover, "large|small|large|small|large|small" indicates a coil as a six-layer six-turn stacked mixed layer antenna in which the first layer, the third layer, and the fifth layer are standard coil layers including only a standard coil, and the second layer, the fourth layer, and the sixth layer are small coil layers only including a small coil. "Large|small|large|small|small|large" indicates a coil as a six-layer six-turn stacked mixed layer antenna in which the first layer, the third layer, and the sixth layer are standard coil layers including only a standard coil, and the second layer, the fourth layer, and the fifth layer are small coil layers including only a small coil.

In the fourth coupling coefficient measurement simulation, it can be confirmed that, with respect to the coils whose number of turns is six, the coupling coefficient k is larger in "large|small|large|small|large|large", "large|small|large (small|large|small", and "large|small|large|small|small|large" including a small coil than in "large|large|large|large|large|large" not including a small coil, similarly to the coils whose number of turn is three in FIG. 16.

Furthermore, it can be confirmed that, with respect to "large|small|large|small|large|large", "large|small|large|small|large|small", and "large|small|large|small|small|large" including a small coil, the coupling coefficient k is larger in "large|small|large|small|large|large" in which the standard coil layers including only a standard coil are consecutive than in "large|small|large|small|large|small", and "large|small|large|small|small|large" in which such standard coil layers are not consecutive.

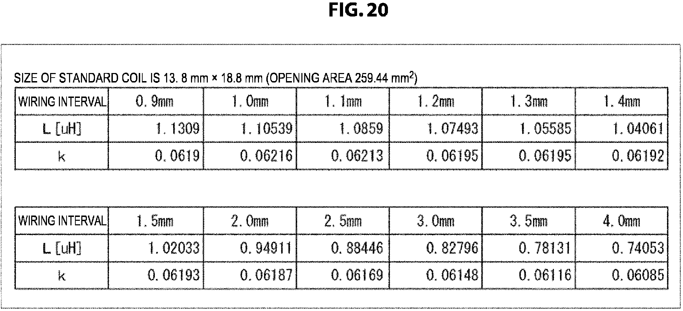

FIG. 20 is a diagram illustrating a simulation result of the fifth coupling coefficient measurement for measuring a coupling coefficient performed by the present inventor.

In the fifth coupling coefficient measurement simulation, the substantially rectangular coil having an opening part of 18.8 mm × 13.8 mm illustrated in FIG. 8 was adopted as a standard coil. An inductance L of a coil as a six-layer six-turn stacked mixed layer antenna indicated as "large|small|large|small|large|large", and a coupling coefficient k with the antenna part 21 of the R/W 11 (FIG. 4) were measured while changing a wiring interval between the standard coil and the small coil (distance between metal wire forming the standard coil and metal wire forming the small coil).

Note that when the wiring interval is 1 mm, the small coil is a substantially rectangular coil having an opening part of 16.8 mm × 11.8 mm, as illustrated in FIG. 9. Therefore, when the wiring interval is smaller than 1 mm, the small coil is a coil having a larger opening part than the case illustrated in FIG. 9, and when the wiring interval is larger than 1 mm, the small coil is a coil having a smaller opening part than the case illustrated in FIG. 9.

In the fifth coupling coefficient measurement simulation, it can be confirmed that the coupling coefficient k is larger when the wiring interval is 1 mm or 1.1 mm than when the wiring interval is another value.

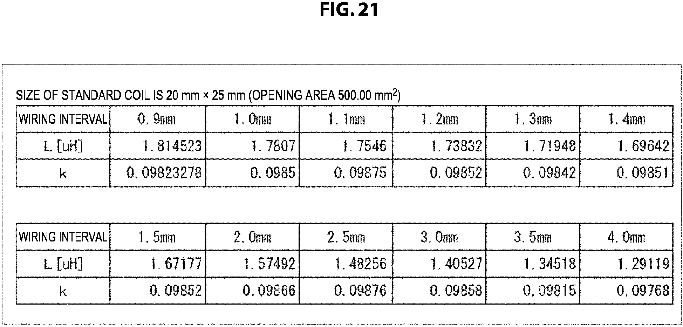

FIG. 21 is a diagram illustrating a simulation result of the sixth coupling coefficient measurement for measuring a coupling coefficient performed by the present inventor.

In the sixth coupling coefficient measurement simulation, a substantially rectangular coil having an opening part of 25 mm × 20 mm, which is larger than the case of FIG. 8, was adopted as a standard coil. An inductance L of a coil as a six-layer six-turn stacked mixed layer antenna indicated as "large|small|large|small|large|large", and a coupling coefficient k with the antenna part 21 of the R/W 11 (FIG. 4) were measured while changing a wiring interval between the standard coil and the small coil.

In the sixth coupling coefficient measurement simulation, it can be confirmed that the coupling coefficient k is larger when the wiring interval is 1.1 mm and 2.5 mm than when the wiring interval is another value.

Moreover, in the fifth and sixth coupling coefficient measurement simulation, it can be confirmed that the coupling coefficient k is larger when the opening part of the standard coil is larger (closer to a size of the opening part of the antenna part 21 of the R/W 11).

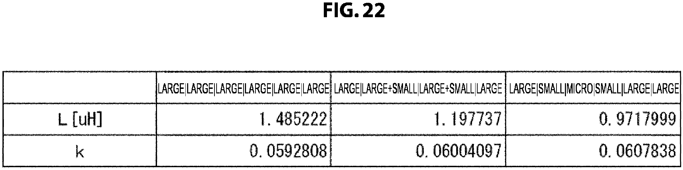

FIG. 22 is a diagram illustrating a simulation result of the seventh coupling coefficient measurement for measuring a coupling coefficient performed by the present inventor.

In the seventh coupling coefficient measurement simulation, an inductance L and a coupling coefficient k with the antenna part 21 of the R/W 11 (FIG. 4) were measured with respect to coils whose number of turns is six.

As a six-turn coil whose coupling coefficient is to be measured, there were adopted "large|large|large|large|large|large", "large|large+small|large+small|large" and "large|small|micro|small|large|large".

Here, "large|large|large|large|large|large" indicates a coil as a six-layer six-turn stacked simple layer antenna in which all of six layers are standard coil layers including only a standard coil, and "large|large+small|large+small|large" indicates a coil as a four-layer six-turn stacked mixed layer antenna in which the first layer and the fourth layer are standard coil layers including only a standard coil, and the second layer and the third layer are double coil layers.

Moreover, "large|small|micro|small|large|large" indicates a coil as a six-layer six-turn stacked mixed layer antenna in which the first layer, the fifth layer, and the six layer are standard coil layers including only a standard coil, the second layer and the fourth layer are small coil layers including only a small coil, and the third layer is a layer on which a micro coil smaller in size than the small coil is formed (micro coil layer).

In the seventh coupling coefficient measurement simulation, it can be confirmed that, with respect to the coils whose number of turns is six, the coupling coefficient k is larger in "large|large+small|large+small|large" and "large|small|micro|small|large|large" including a small coil (or a micro coil) than in "large|large|large|large|large|large" not including a small coil, similarly to the coils whose number of turn is three in FIG. 16.

Note that in the seventh coupling coefficient measurement simulation, it can be confirmed that, with respect to "large|large+small|large+small|large" or "large|small|micro|small|large|large" including a small coil (or a micro coil), the coupling coefficient k is slightly larger in large|small|micro|small|large|large" including a micro coil than in "large|large+small|large+small|large" not including a micro coil.

< Application example of communication system >

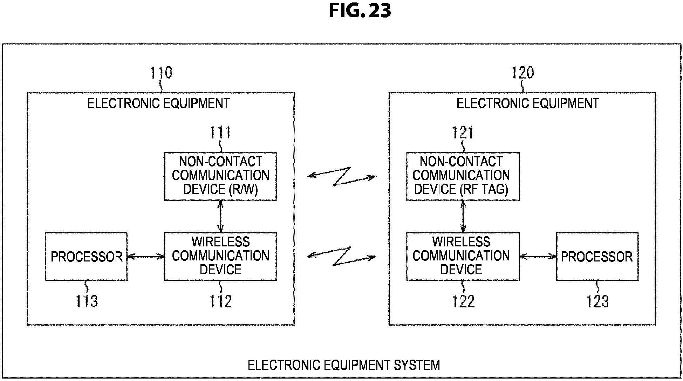

FIG. 23 is a block diagram illustrating a configuration example of an embodiment of electronic equipment system to which the communication system of FIG. 1 is applied.

In FIG. 23, the electronic equipment system includes electronic equipment 110 and 120.

The electronic equipment 110 and 120 are a recorder, a digital camera, a television receiver (TV), a portable terminal such as a cellular phone or a tablet terminal, a sound output apparatus such as a speaker or a headphone, and another electronic equipment, for example, and have a communication function.

Thus, the electronic equipment 110 and 120 can perform communication with each other.

The electronic equipment 110 includes a non-contact communication device 111, a wireless communication device 112, and a processor 113.

The non-contact communication device 111 is configured similarly to the R/W (non-contact communication device) 11 of FIG. 1, for example, and performs, as an initiator, non-contact communication (NFC communication) with an RF tag such as a non-contact communication device 121 and the like described later. Therefore, in FIG. 23, the non-contact communication device 111 includes, as an antenna, a coil satisfying the evaluation specifications of the second wave of analog testing in the NFC forum illustrated in FIG. 4, for example, and performs non-contact communication using the antenna. Note that in the non-contact communication device 111, a stacked mixed layer antenna may be also mounted, similarly to the wireless communication device 112 described later, for example, and non-contact communication can be performed using the stacked mixed layer antenna.

The wireless communication device 112 performs wireless communication supporting Bluetooth (registered trademark) and the like, for example, that is higher-speed wireless communication than the non-contact communication device 111.

The processor 113 performs processing for exerting functions unique to the electronic equipment 110.

The electronic equipment 120 includes a non-contact communication device 121, a wireless communication device 122, and a processor 123.

The non-contact communication device 121 is configured similarly to the RF tag (non-contact communication device) 12 of FIG. 1, for example, and performs, as a target, non-contact communication with the R/W of the non-contact communication device 111 and the like. Therefore, in FIG. 23, the non-contact communication device 121 includes a stacked mixed layer antenna, similarly to the RF tag 12 of FIG. 1, for example, and performs non-contact communication using the stacked mixed layer antenna.

The wireless communication device 122 performs wireless communication supporting Bluetooth (registered trademark) and the like, for example, that is higher-speed wireless communication than the non-contact communication device 121, similarly to the wireless communication device 112.

The processor 123 performs processing for exerting functions unique to the electronic equipment 120.

In the above-described electronic equipment system, when the electronic equipment 110 and 120 become adjacent to each other, non-contact communication is performed between the non-contact communication device 111 as an initiator and the non-contact communication device 121 as a target, and each of the electronic equipment 110 and 120 specifies that they are mutually communication partners.

That is, the electronic equipment 110 specifies that the electronic equipment 120 is its communication partner, and the electronic equipment 120 specifies that the electronic equipment 110 is its communication partner.

Thereafter, handover for switching communication from the non-contact communication device 111 to the wireless communication device 112 is performed in the electronic equipment 110, and handover for switching communication from the non-contact communication device 121 to the wireless communication device 122 is performed in the electronic equipment 120.

In each of the electronic equipment 110 and 120, the communication partner is mutually specified. Thus, after the handover, high-speed wireless communication can be performed between the wireless communication devices 111 and 112.

Therefore, the electronic equipment 110 and 120 can specify, only by being adjacent to each other, that they are mutually communication partners and perform high-speed wireless communication.

As a result, a user enables data communication between the electronic equipment 110 and 120 only by bringing the electronic equipment 110 and 120 adjacent to each other.

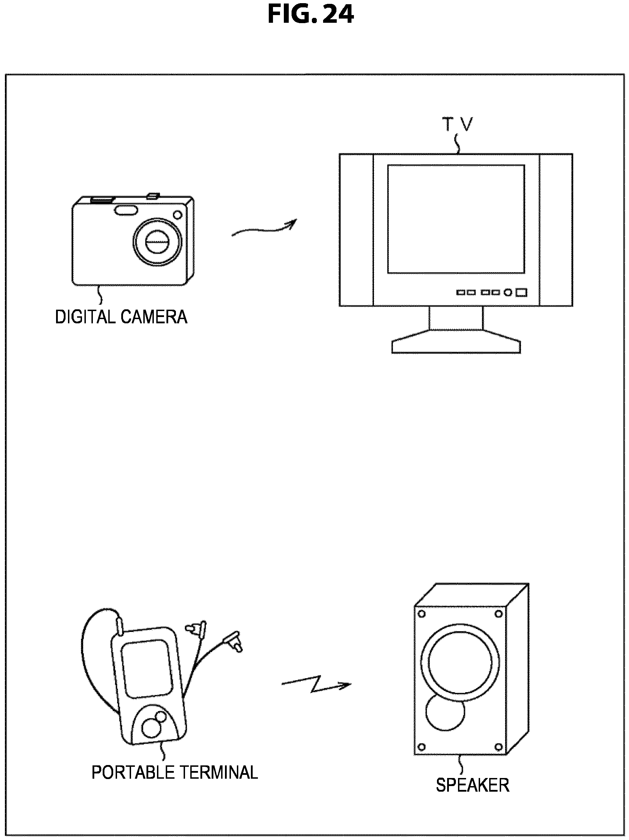

FIG. 24 is a diagram for explaining a concrete example of the electronic equipment 110 and 120 of FIG. 32

As illustrated in FIG. 24, for example, a television receiver (TV) can be adopted as the electronic equipment 110, for example, and a digital camera can be adopted as the electronic equipment 120.

In this case, the digital camera as the electronic equipment 120 includes the non-contact communication device 121 adopting a small stacked mixed layer antenna. The user can transfer contents such as movies or still images captured by the digital camera, for example, to the TV and view them only by bringing the digital camera close to the TV as the electronic equipment 110 including the non-contact communication device 111 capable of non-contact communication with the non-contact communication device 121.

In addition, a portable device such as a cellular phone, a smartphone, and a portable music player, for example, can be adopted as the electronic equipment 110, for example, and a small speaker or headphone outputting music and the like to be reproduced in the portable device, for example, can be adopted as the electronic equipment 120 including the non-contact communication device 121 adopting a small stacked mixed layer antenna.

In this case, the user can transfer the music reproduced in the portable device, for example, to the speaker or the headphone and output it only by bringing the portable device and the speaker or the headphone close to each other.

Note that in the present specification, the system indicates a set of a plurality of components (devices, modules (parts), and the like), and whether all components are in a same housing does not matter. Therefore, a plurality of devices stored in separate housings and connected to one another through a network, and a single device in which a plurality of modules are stored in one housing are both systems.

Moreover, the embodiment of the present technology is not limited to the above-described embodiments, and various changes can be made within a range not departing from the spirit of the present technology.

That is, the size and shape of the standard coil or the small coil are not limited to the above-described sizes or shapes, for example.

Furthermore, the stacked mixed layer antenna can further include a micro coil stacked in addition to the standard coil and the small coil, as described in FIG. 22.

Moreover, the number of turns of the standard coil, the small coil, and the like in each layer forming the stacked mixed layer antenna is not limited to substantially one turn, and may be two turns or more.

Furthermore, the embodiment has described the case in which the stacked mixed layer antenna is applied to the antenna part 41 of the RF tag 12. However, the stacked mixed layer antenna can be also applied to the antenna part 21 of the R/W 11, an antenna of a reader or a writer performing only reading from or writing into the RF tag 12, and the like.

Additionally, the present technology may also be configured as below.

<1> An antenna including:
   one or more standard coils including an opening part of a given size; and
   one or more small coils including an opening part smaller in size than the opening part of the standard coil, the one or more standard coils and the one or more small coils being connected electrically,
   wherein a standard coil layer including the standard coil and a small coil layer including the small coil are stacked such that the opening part of the small coil lies within the opening part of the standard coil, and
   wherein a surface layer is the standard coil layer.
<2> The antenna according to < 1 >,
   wherein one or more of the standard coil layers that are layers other than the surface layer and the small coil layers are double coil layers including the standard coil and the small coil.
<3> The antenna according to < 1 > or < 2 >,
   wherein a number of turns of the standard coil or the small coil in each layer is substantially one turn.
<4> The antenna according to any one of < 1 > to < 3 >,
   wherein an area ratio between the opening part of the standard coil and the opening part of the small coil is substantially 4:3.
<5> The antenna according to any one of < 1 > to < 4 >,
   wherein the standard coil layer and the small coil layer are stacked alternately.
<6> The antenna according to any one of < 1 > to < 4 >,
   wherein the standard coil layers or the small coil layers are stacked consecutively.
<7> The antenna according to any one of < 1 > to < 4 >,
   wherein a micro coil layer including a micro coil including an opening part smaller in size than the opening part of the small coil is further stacked.
<8> The antenna according to < 1 >,
   wherein six layers of the standard coil layers and the small coil layers are stacked in total.
<9> The antenna according to < 8 >,
   wherein a first layer, a second layer, a fourth layer, and a sixth layer among the six layers are the standard coil layers, and
   wherein a third layer and a fifth layer among the six layers are the small coil layers.
<10> The antenna according to < 9 >,
   wherein the standard coil is a substantially rectangular coil including an opening part of substantially 19 mm × 14 mm,
   wherein the small coil is a substantially rectangular coil including an opening part of substantially 17 mm × 12 mm, and
   wherein the standard coil layer and the small coil layer are stacked such that a distance on a plane including the opening part between wiring forming the standard coil and wiring forming the small coil is substantially 1 mm.
<11> Electronic equipment including:
   an antenna including
      one or more standard coils including an opening part of a given size, and
      one or more small coils including an opening part smaller in size than the opening part of the standard coil, the one or more standard coils and the one or more small coils being connected electrically,
   wherein a standard coil layer including the standard coil and a small coil layer including the small coil are stacked such that the opening part of the small coil lies within the opening part of the standard coil, and
   wherein a surface layer is the standard coil layer; and
   a signal processor configured to perform signal processing for performing wireless communication using the antenna.

### Reference Signs List

- 11, 12: non-contact communication device
- 21: antenna part
- 22: reception unit
- 23: demodulation unit
- 24: decoding unit
- 25: data processor
- 26: encoding unit
- 27: RF signal output unit
- 28: modulation unit
- 29: controller
- 29A: CPU
- 29B: EEPROM
- 30: power source unit
- 40: IC (bare) chip
- 41: antenna part
- 42: reception unit
- 43: demodulation unit
- 44: decoding unit
- 45: data processor
- 46: encoding unit
- 47: load modulation unit
- 48: power source unit
- 49: controller
- 49A: CPU
- 49B: EEPROM
- 110: electronic equipment
- 111: non-contact communication device
- 112: wireless communication device
- 113: processor
- 120: electronic equipment
- 121: non-contact communication device
- 122: wireless communication device
- 123: processor

## Claims

1. An antenna comprising:
one or more standard coils including an opening part of a given size; and
one or more small coils including an opening part smaller in size than the opening part of the standard coil, the one or more standard coils and the one or more small coils being connected electrically,
wherein a standard coil layer including the standard coil and a small coil layer including the small coil are stacked such that the opening part of the small coil lies within the opening part of the standard coil, and
wherein a surface layer is the standard coil layer.

2. The antenna according to claim 1,
wherein one or more of the standard coil layers that are layers other than the surface layer and the small coil layers are double coil layers including the standard coil and the small coil.

3. The antenna according to claim 1,
wherein a number of turns of the standard coil or the small coil in each layer is substantially one turn.

4. The antenna according to claim 1,
wherein an area ratio between the opening part of the standard coil and the opening part of the small coil is substantially 4:3.

5. The antenna according to claim 1,
wherein the standard coil layer and the small coil layer are stacked alternately.

6. The antenna according to claim 1,
wherein the standard coil layers or the small coil layers are stacked consecutively.

7. The antenna according to claim 1,
wherein a micro coil layer including a micro coil including an opening part smaller in size than the opening part of the small coil is further stacked.

8. The antenna according to claim 1,
wherein six layers of the standard coil layers and the small coil layers are stacked in total.

9. The antenna according to claim 8,
wherein a first layer, a second layer, a fourth layer, and a sixth layer among the six layers are the standard coil layers, and
wherein a third layer and a fifth layer among the six layers are the small coil layers.

10. The antenna according to claim 9,
wherein the standard coil is a substantially rectangular coil including an opening part of substantially 19 mm × 14 mm,
wherein the small coil is a substantially rectangular coil including an opening part of substantially 17 mm × 12 mm, and
wherein the standard coil layer and the small coil layer are stacked such that a distance on a plane including the opening part between wiring forming the standard coil and wiring forming the small coil is substantially 1 mm.

11. Electronic equipment comprising:
an antenna including
one or more standard coils including an opening part of a given size, and
one or more small coils including an opening part smaller in size than the opening part of the standard coil, the one or more standard coils and the one or more small coils being connected electrically,
wherein a standard coil layer including the standard coil and a small coil layer including the small coil are stacked such that the opening part of the small coil lies within the opening part of the standard coil, and
wherein a surface layer is the standard coil layer; and
a signal processor configured to perform signal processing for performing wireless communication using the antenna.
